Europäisches Patentamt

European Patent Office

Office européen des brevets

(19)

(11) Publication number: **0 092 889**
**A2**

(12) **EUROPEAN PATENT APPLICATION**

(21) Application number: 83200590.4

(22) Date of filing: 22.04.83

(51) Int. Cl.³: **B 29 C 17/02**
**F 16 L 47/06**

(30) Priority: 23.04.82 NL 8201705
23.04.82 NL 8201710

(43) Date of publication of application:
02.11.83 Bulletin 83/44

(84) Designated Contracting States:
AT BE CH DE FR GB IT LI LU NL SE

(71) Applicant: WAVIN B.V.
Händellaan 251
NL-8031 EM Zwolle(NL)

(72) Inventor: Cancrinus, Hendrik
21 Entingheweg
NL-7991 CC Dwingeloo(NL)

(74) Representative: van der Veken, Johannes Adriaan,
Ir. et al,
EXTERPATENT 3 & 4 Willem Witsenplein
NL-2596 BK The Hague(NL)

(54) **A method and apparatus for manufacturing a plastic pipe part with socket end, as well as a pipe part with socket end obtained in this way.**

(57) A plastic pipe 52 is provided with three subsequent pipe widenings 24a, 54 and 55 of increasing diameter by means of a fluid pressure striking the plastic pipe instantaneously to an outer mould 6 comprising three widenings adapted to the pipe widenings. Prior to the action of the fluid pressure a compressed sealing member 25 is accommodated in the pipe and after the formation of the pipe widenings said sealing member 25 is released, so that a head portion 56 of the sealing member engages the third widening 55. Subsequently the end portion 41 of the pipe is inwardly rebent around the head portion 56. The fluid pressure acts upon the pipe 52 near the free end of the said pipe and flows substantially parallel to the end portion 41 of the socket to be formed or perpendicularly to the transition wall 35 between second widenings 54 and third widening 55.

Rebending the end portion is performed by moving a deforming member 23 by means of the fluid pressure retained after formation of the three pipe widenings 24a, 54 and 55.

The apparatus for providing a plastic pipe 52 with three subsequent widenings comprises a pipe support 27 provided with an annular sealing member 26 for accommodating a sealing member 25 deformed by means of a movable cap 27.

The apparatus further comprises a valve 4 which may sealingly cooperate with an inner cylinder 1. After movement of the valve 4 an annular slit 64 is formed for subjecting the pipe part to the action of a fluid pressure. The slit 64 is located near the free end 23a of deforming member 23 engaging the free end 41a of the plastic pipe.

./...

EP 0 092 889 A2

Fig.2.

-1-

A method and apparatus for manufacturing a plastic pipe part with
socket end, as well as a pipe part with socket end obtained in
this way.

The invention relates to a method for providing a plastic pipe
part with a socket end by placing the end portion of a pipe part
opposite a mould wall having a shape being adapted to the shape
of the socket end to be formed, deforming said plastic pipe part
portion and moving same against the mould wall by means of an
internal fluid pressure, subsequently positioning a head portion
of an annular sealing member near the end of the socket and finally
deforming the socket end portion into a chamber for retaining said
head portion of an annular sealing member.

A method of this type is known in the art. Said known method presents the disadvantage that the time required for deforming the
plastic pipe portion brought in a deformable state to a finished
product, is relatively long so that the manufacture of finished
products is considerably decreased and is mostly below the desired
value.

The invention aims to provide a method wherein the socket end to
a plastic pipe part can almost instantaneously be formed, while
additionally, in a very rapid manner, the socket end can be provided with a chamber for retaining the head portion of an annular
sealing member.

This object is achieved according to the invention in that such a

-2-

fluid pressure acts upon the plastic pipe part portion to be moved against the mould wall, that said portion is almost instantaneously struck against the mould wall, and subsequently the socket end portion is deformed. Particularly the fluid pressure acts from the region near the free end of the socket to be formed and without closing the interior of the pipe part to be deformed.

Advantageously, after having installed a head portion of an annular sealing member against the inner wall of the socket, the end part adjoining said inner wall is bent backwards around the head portion of the sealing member.

Thus, on the one hand the socket end can be formed within a very short period of time while on the other hand, the head portion of the sealing member can be fixed.

It has, surprisingly, also been found that after having formed the final product, this product can immediately be removed from the mould without any additional cooling, thereby completely maintaining its given shape.

The term instantaneous means in this case a time of less than 0,5 sec., preferably less than 0,2 sec, more preferably less than 0,1 sec and very preferably less than 0,02 sec.

It is recommended that the portion of the pipe part to be deformed is heated to the deformation temperature required for the relative plastic.

After the action of the fluid pressure the remaining fluid pressure is used in a very advantageous manner for deforming the socket end portion, after having installed the head portion of an annular sealing member against the inner side of said socket end.

In a very rapid manner the end portion of a socket end can thus be inwardly rebent, involving the formation of a chamber in which said head portion is retained.

A compressed sealing member is advantageously accommodated in an at least partially closed storage space which space is opened after the action of the fluid pressure, preferably due to action of the remaining fluid pressure.

The present invention also comprises an apparatus for providing a thermoplastic pipe part with a socket end, at least comprising a pipe part support, pipe part widening means and a deforming member for deforming a socket end portion, said apparatus being characterized according to the present invention in that means are provided for subjecting a plastic pipe part portion to be deformed to a fluid pressure in such a manner that said pipe part portion almost instantaneously strikes against the mould wall, and control means for moving the deforming member after the action of the fluid pressure.

In a very advantageous manner, after the action of the fluid pressure the control means for moving the deforming member can be brought into cooperation with the storage space for storing the remaining pressurized fluid.

Advantageously the means for subjecting the portion to be deformed to a fluid pressure comprises an axially displaceable sealing member cooperating with an end portion of a chamber comprising the fluid for the action of the fluid pressure.

By means of the method and apparatus according to the present invention socket endscan quickly and accurately be formed to plastic pipe parts and can be provided almost simultaneously with a retained sealing member.

The present invention will be illustrated with respect to an embodimentin the accompanying drawings, wherein:

-4-

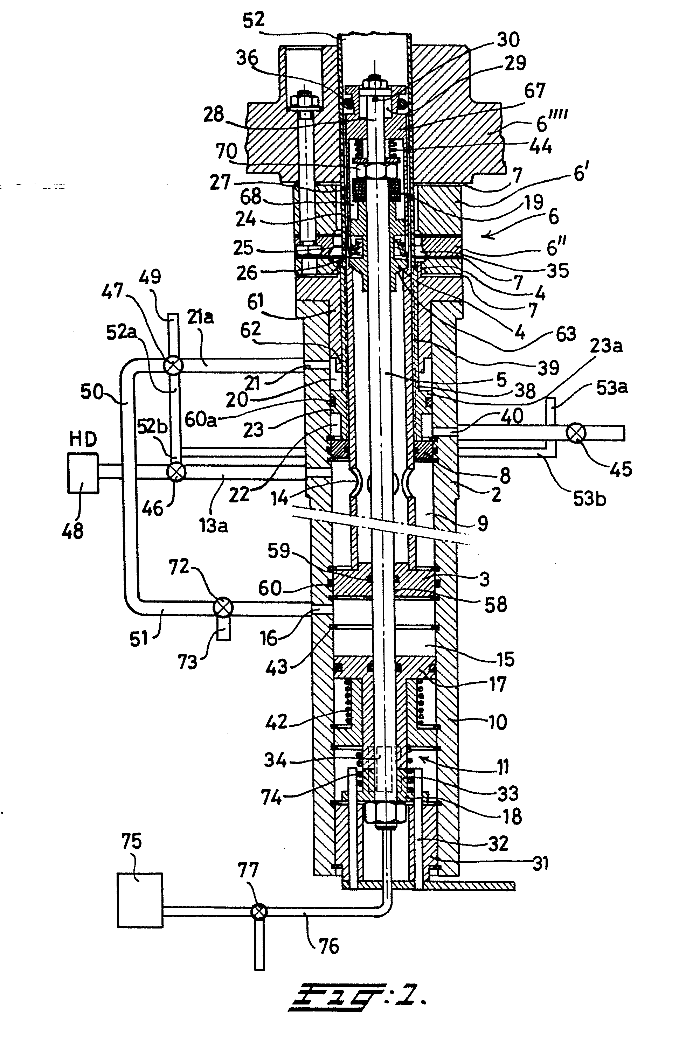

Figure 1 is a view of the apparatus according to the invention in the initial stage;

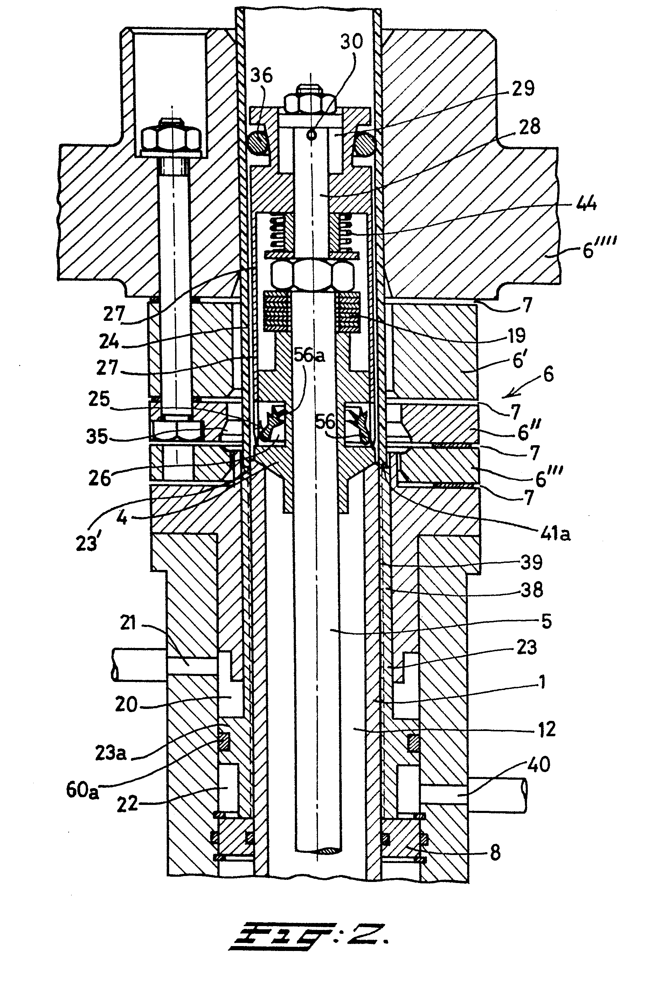

Figure 2 is an enlarged view of the apparatus according to the invention;

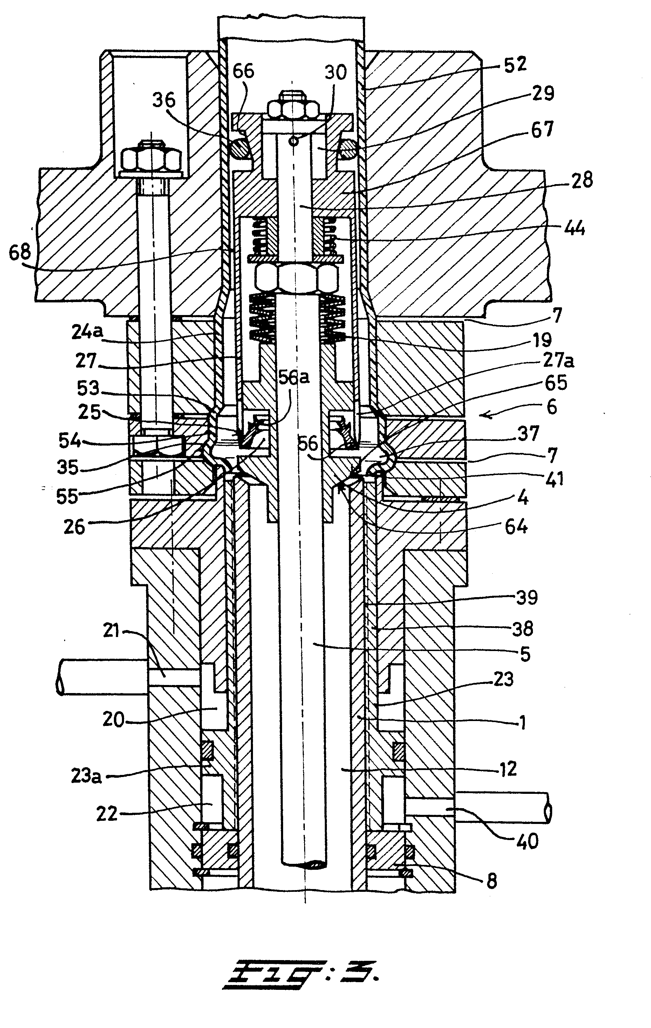

Figure 3 is an enlarged view of the apparatus according to the invention after the action of a fluid pressure;

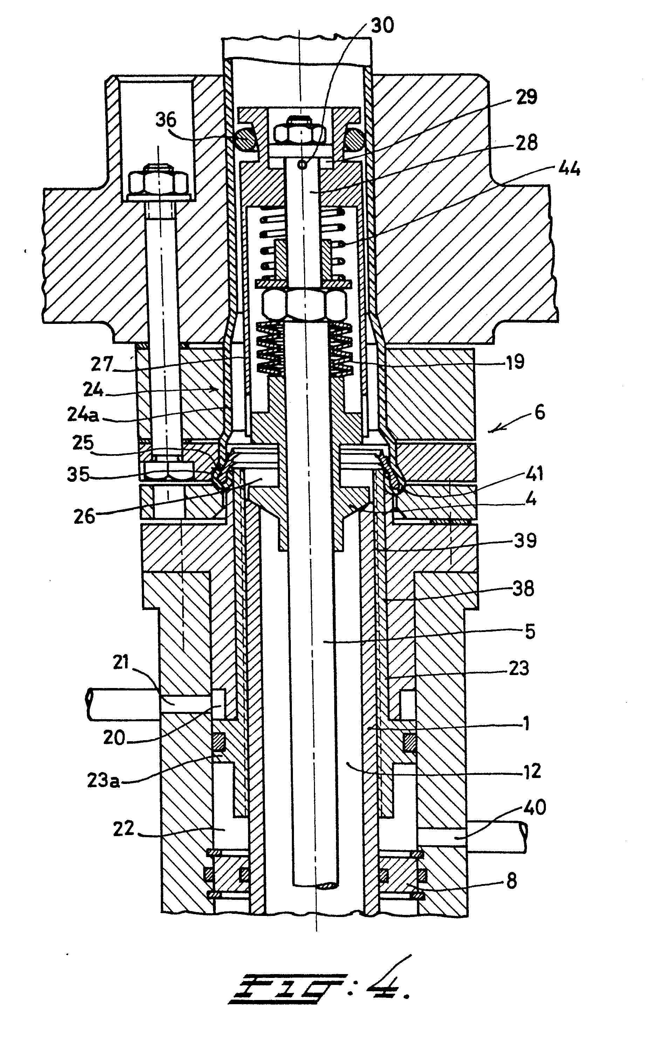

Figure 4 is an enlarged view of the apparatus according to the invention after having inwardly rebent a socket end portion.

The drawings illustrate a plastic pipe part 52 having an end portion being provided with a socket end 24 comprising three successive widenings, to wit a first widening 24a, a second widening 54 adjoining the former through a transition wall 53 and a final third widening 55 adjoining the second one through a tapering transition wall 35, in which third widening a head portion 56 of an annular sealing sleeve 25 is disposed and retained by rebending the end portion 41 following the third widening 55 into a radial inward direction.

For forming a socket end to a plastic pipe part 52 an apparatus as illustrated in the drawings is used. Said apparatus comprises an outer cylinder 2 having an inner cylinder 1, said cylinder 1 internally bounding a storage space 12 for storing pressure fluid to have a fluid pressure act upon a plastic pipe part 52.

One end of storage space 12 is sealed by a sealing plate 3 comprising a passage 58 with a seal 59, through which passage 58 a rod 5 can be moved.

Said sealing plate 3 sealingly cooperates with the inner side of outer cylinder 2, through a sealing ring 60.

A conduit 13a comprising a valve 46 and being provided with an inlet 13 for feeding a pressure fluid for generating a fluid pressure is connected to a high pressure fluid generating member 48, such as a compresor.

Inner cylinder 1 comprises bores 14 to assure a connection between the pressure fluid space 12 and conduit 13a debouches into a space 9.

Space 9 is on the other hand sealed by a second sealing plate 8.

A cylindrical slide 23 comprising a circular shoulder 23a, sealingly co-operating with the inner side of the outer cylinder 2 through a sealing ring 60a, is provided between the outer side of the inner cylinder 1 and the inner side of the outer cylinder 2.

The presence of the aforementioned shoulder 23a enables a control room 22 to be formed between the second sealing plate 8 and the shoulder 23a, in which control room 22 pressure fluid can be accommodated, another pressure room 20 being formed above the circular shoulder 23a.

Slide 23 comprising free slide end 23' with shoulder 23a is able to move along the outer side of the inner cylinder 1, thereby on the one hand being bounded by a second sealing plate 8 and on the other hand by front part 62 of the annular sealing member 60. ·

Front end 63 of the inner cylinder 1 sealingly abuts a valve 4, the front end 63 and the wall of the valve 4 abutting the same, both being chamfered. The free end 41a of the pipe part 52 engages in such case the free end 23' of slide 23.

Valve 4 interacts with plate springs 19 keeping said valve 4 pressed upon the front end 63 of inner cylinder 1. On the other hand, the plate springs 19 co-operate with a rod 5 upon which a nut 70 is secured, through which the plate springs 19 are compressed.

-6-

An annular chamber 26 is formed within valve 4 for accommodating a sealing sleeve 25 comprising a head portion 56 and a sleeve part 56a. The outer side of annular chamber 26 within the valve 4 is surrounded by a cap 27 being slideable along the end part 28 of rod 5.

For this purpose a cap fixing member 67 provided with a circular groove 66 for accommodating a sealing ring 36 is connected to said cap 27.

The end portion of cap 27 consists of a number of adjacent fingers 27a and additional fingers can be positioned thereinbetween for installing a sealing member 25 in a compressed condition in chamber 26, which additional fingers can be removed after fingers 27a of cap 27 prevent an expansion of sealing member 25.

For that purpose cap 27 is pressed downwards by a pressure in a space 29 connected to a bore 30 and a longitudinal channel in rod 5 being connected to a source 75 of pressure fluid through a conduit 76 comprising a valve 77.

The present invention also comprises a mould 6 comprising mould parts 6', 6", 6'" and 6"" for forming a socket end to a plastic pipe part.

The mould parts 6', 6", 6'" and 6"" are located at a short distance from each other thus forming annular spaces 7 for the escape of air at the outer side of the pipe part during the action of the fluid pressure.

An absence of such annular spaces would cause an air cushion to be formed between the inner side of the mould and the outer side of the pipe part, preventing the desired deformation.

In the initial stage pressure fluid is fed to room 20 through the open valve 47 and conduit 21a, room 22 being brought to ambient pressure by opening a valve 45 in conduit 40 and by reclosing the valve 45 when the desired ambient pressure has been attained.

Additional pressure fluid is fed to space 9 through conduit 13a and open valve 46 and to storage space 12, through the bores 14. By a rapid upward motion of valve 4 an annular passage 64 is formed through which fluid pressure acts almost instantaneously upon portion 24 of the plastic pipe part 52 and this portion 24 is deformed while simultaneously forming the three widenings as mentioned hereinbefore. The motion of valve 4 from front end 63 of inner cylinder 1 occurring very quickly, will also involve a substantial instantaneous action of the fluid pressure. The manner in which this is attained will be described later on.

After the action of the fluid pressure, the subsequent deformation of the plastic pipe part portion while forming the socket end and the chamber for accommodating the head portion 56 of sealing member 25, a high fluid pressure also prevails in space 68, causing cap fixing member 67 to be pressed upwards. This is even improved by the presence of spring 44. Due to the presence of sealing ring 36 the fluid cannot escape. As cap 27 is displaced along extremity 28 of rod 5, sealing member 25 is allowed to expand causing said head part 56 to be installed in socket groove chamber 37. Recesses 38 in the inner side of slide 23 forming narrow channels 39 by co-operation with the outer side of cylinder 1, allow pressure fluid to leak away towards the control room 22 in which a pressure is generated after the action of the fluid pressure and the formation of the socket end. After reaching a predetermined pressure controlled by a pressure sensor 53a, feeding pressure fluid to storage space 12 is terminated through control member 53b by closing valve 46; on the other hand valve 47 is opened, thus connecting conduit 21a to outlet 49 and enabling pressure fluid to escape from room 20. The pressure generated in room 22 will give slide 23 an upward motion and cause end portion 41 of pipe part 52 to bent around head portion 56 of a sealing member 25.

After the formation of the socket end and the instalment of head portion 56 of sealing member 25 in the socket end groove chamber 37, the spaced mould parts 6'-6"" accommodated around the pipe part are removed, and subsequently the pipe part with the socket end is removed.

Before removing the pipe part valve 4 will be moved against the front end 63 of inner cylinder 1 in a manner as will be described later on to prevent an escape of relatively expensive pressure fluid from storage space 12.

The lower side of rod 5 cooperates with a cam ring 18. Said cam ring is provided with cams 33 which may fit into recesses 34 provided in a piston 17 interacting with said cam ring 18. In the initial stage at a sealed space 12 said cams 33 are, however, not disposed in said recesses 34.

Piston 17 is kept pressed downwards by a fluid pressure chamber 15 provided with an inlet 16 for feeding pressure fluid from high pressure fluid generating member HD 48 through conduit 51. Chamber 15 also comprises an abutment edge 43, the significance of same will be explained later on.

Piston 17 keeps the cam ring 18 and thus also rod 5, pressed downwards so that the plate springs 19 exert an optimum pressure upon valve 4 and also upon the chamfered front end 63 of the inner cylinder 1, thus ensuring an optimum sealing.

In the apparatus according to the invention the outer cylinder 2 further comprises a rotatable release 31 having a plurality of pins 32, so that the cam ring 18 can be turned over a given angle, thus causing cams 33 of the said cam ring to fit into the said recesses 34 of the piston 17.

Due to the high power exerted on the one  hand by the pla e springs 19 downwards on the valve and on the other hand upwards on the rod 5, in view of the co-operation with nut 70 on rod 5, the rod 5 is pushed upwards at a high power and is thus given a high upward velocity thereby releasing the pression of the plate springs 19.

At a given moment the downward force exerted on valve 4 by plate springs 19 has become smaller than the upward force exerted on the said valve by the pressure in the storage space 12, so that valve 4 will get detached from the front end 63 and will immediately be lifted for some millimeters, due to the large upward velocity of rod 5. The pressure in space 12 is discharged through the annular slit thus formed, and strikes the heated pipe portion against the wall of the mould 6.

The annular slit 64 is very conveniently located near the free end 23' of slide 23 and extends almost perpendicularly to the surface of the transition 35 from the second widening 54 towards the third widening 55 or parallel to the free end portion 41 of the pipe joining the third widening. The annular slit also opens at or near the front end 41a of the end part 41.

To re-seal storage space 12 prior to the removal of the plastic pipe part with a socket end, valve 72 is closed and inlet 16 of chamber 15 is connected to an open discharge 73 so that chamber 15 becomes pressureless. Due to the action of spring 42 piston 17 is moved upwards until it abuts the abutment edge 43.

The action of a spring 74 causes release 31 and cam ring 18 to rotate over a certain angle towards their original position, so that cams 33 on cam ring 18 will no longer fit into the recesses 34 of the piston 17.

Subsequently pressure fluid is admitted in chamber 15, so that piston 17 regains its initial position and cam ring 18 is pressed downwards thus compressing plate springs 19 through rod 5 and nut 70

-10-

whereupon valve 4 is pressed against the front end 63 of inner cylinder 1.

It is observed that the reference numerals in the claims are not intended to restrict the scope thereof, but are only denoted for clarification.

CLAIMS

1.    A method for providing a plastic pipe part (52) with a socket end by  placing the end portion of a pipe part opposite a mould wall (6) having a shape being adapted to the shape of the socket end to be formed, deforming said plastic pipe part portion and moving same against  the mould wall by means of an internal fluid  pressure, subsequently positioning a head portion (56) of an annular sealing member (25) near the end of the socket and finally deforming the socket end portion (41) into a chamber for retaining said head portion (56) of an annular sealing member (25) characterized in that prior to the action of the fluid pressure a deformed sealing member (25) is installed within the pipe part whereupon  such a fluid pressure acts upon the plastic pipe part portion to be moved against the mould wall (6), that  said portion is almost instantaneously struck against the mould wall and subsequently the socket end portion (41) is deformed.

2.    A method as claimed in claim 1, characterized in that after having installed a head portion (56) of an annular sealing member (25) against the inner wall of the socket, the end part (41) adjoining said inner wall is bent backwards around the head portion (56) of the sealing member (25).

3.    A method as claimed in any one of the preceding claims, characterized in that after the action of the pressure fluid, the remaining fluid pressure is used for deforming the end part (41) of the socket.

4.    A method as claimed in any one of the preceding claims, characterized in that the fluid pressure acts in such a manner that the plastic pipe part portion to be deformed is perpendicularly hit in a transition part (35) between a second (54) and third widening (55) of the plastic pipe part portion to be formed, and/or after the  action of the fluid pressure and prior to the removal of the deformed plastic pipe part, the remaining pressure fluid is substantially retained.

5. A method as claimed in any one of the preceding claims, characterized in that after the action of the fluid pressure the front end (41a) of the socket end portion (41) has substantially the same internal diameter as the undeformed pipe part.

6. Apparatus for providing a thermoplastic pipe part (52) with a socket end and an annular sealing member (25), at least comprising a pipe part support (67), pipe part widening means, and a deforming member for deforming a socket end portion around a head portion (56) of a sealing member (25), characterized in that means (4, 12, 5, 19) are provided for subjecting a plastic pipe part portion to be deformed to a pressure fluid in such a manner that said pipe part portion to be deformed almost instantaneously strikes against the mould wall, as well as control means (39, 22) for moving the deforming member (23) after the action of the fluid pressure wave and an annular chamber (26) for accommodating a sealing member in a deformed state.

7. Apparatus as claimed in claim 6, characterized in that the control means for the control of the movement of the deforming member can be brought into co-operation with a storage space (12) for storing remaining pressurized fluid after the action of the fluid pressure.

8. Apparatus as claimed in claim 6 or 7, characterized in that the control means for the control of the deforming member comprise channels (39) assuring a connection between room (22) and storing space (12) for storing pressurized fluid.

9. Apparatus as claimed in claim 6 to 8, characterized in that the apparatus comprises a valve (4) movable from a seat (63) situated near the end of the space for storage of pressurized fluid, said valve comprising an annular chamber (26) which can be sealed by a movable cap (27) for accommodating a deformed sealing member.

10. Apparatus as claimed in any one of the preceding claims 6 to 9, characterized in that

- the deforming member (23) comprises a circular shoulder (23a) bounding, at either side thereof, a room (22) and a room (20) which room (22) is connected to a pressure sensor (53) controlling supply and/or discharge of pressure fluid towards or from these rooms (22 and 20) and/or

- the upper side of valve (4) co-operates with plate springs (19) which, in conjunction with a rod (5), co-operate with fixing means for the rod; while the rod (5) preferably engages a cam ring (18) provided with cams (33), said cam ring co-operating with a piston (17) provided with recesses (34) and bounding a chamber (15) comprising an abutment (43) and a pressure fluid inlet (16); and/or

- the said apparatus comprises rotating means (31) for decoupling the means fixing the rod (5) which enable said rod to move.

11. A plastic pipe part with socket end obtained by the use of the method and/or apparatus as claimed in claims 1-10.

0092889

Fig.1.

0092889

FIG. 2.

Fig. 3.

0092889

FIG: 4.